# EUROPEAN PATENT SPECIFICATION

(11) **EP 4 429 933 B1**
(45) Date of publication and mention of the grant of the patent: **22.10.2025**
(21) Application number: 22818620.1
(22) Date of filing: 11.11.2022
(51) Int. Cl.: B62B 7/14

(54) **LOCKING DEVICE, LOCKING STRUCTURE, CHILD CARRIER AND SEAT OF CHILD CARRIER**
VERRIEGELUNGSVORRICHTUNG, VERRIEGELUNGSSTRUKTUR, KINDERTRAGE UND SITZ FÜR EINE KINDERTRAGE
DISPOSITIF DE FEMETURE, STRUCTURE DE FERMETURE, PORTE-BÉBÉ ET SIÈGE DE PORTE-BÉBÉ

(30) Priority: 11.11.2021 CN 202111332987
(43) Date of publication of application: 18.09.2024
(73) Proprietor: Wonderland Switzerland AG, 6312 Steinhausen (CH)
(72) Inventor: ZHANG, Xiaojian, 6312 Steinhausen (CH)
(74) Representative: Lucke, Andreas
(86) International application number: PCT/EP2022/081679
(87) International publication number: WO 2023/084058

(56) References cited:
- EP-A1- 1 211 124
- CN-A- 112 519 867
- US-A1- 2011 278 810

## Description

### TECHNICAL FIELD

The present invention relates to a locking device, a locking structure, a child carrier, and a seat of a child carrier.

### BACKGROUND

Child carriers such as strollers make it easier for people to carry younger children for outdoor activities. For easy storage and carrying, the child carriers are generally designed as foldable structures. To further reduce volumes of the child carriers after folding, frames and seats of some child carriers are designed as detachable structures. Examples of such detachable structures are described in documents CN 112519867 A, EP 1 211 124 A1 and US 2011/278810 A1.
When a child carrier is mounted, the seat is inserted into a mounting part of the frame, and the seat and the frame are locked through a locking device to prevent relative movement of the seat and the frame, so that the seat is stably supported on the frame. When the child carrier is disassembled, a user is required to use one hand to press an unlock button of the locking device to keep the locking device in an unlocked state and at the same time, use the other hand to pull up the seat to detach the seat from the frame, which makes the detachment of the seat from the frame more complicated and inconvenient, affecting the user's experience.

### SUMMARY

The present invention is intended to provide a locking device, which has a simple unlocking operation, so that the locking device and a connector are easily detached. The present application further provides a locking device, a child carrier, and a seat of a child carrier.

The present invention provides a locking device, including: a housing; and an unlock button, a locking member and a first elastic member disposed on the housing; the locking member being configured to be locked with and fitted to a locking hole in a connector, the first elastic member being configured to keep the locking member in a locked state, the unlock button driving the locking member to an unlocked state when pressed; wherein the locking device further includes a retaining member and a second elastic member that are disposed on the housing; the retaining member is configured to engage with the unlock button to keep the unlock button at a pressing position where the locking member is unlocked, and the second elastic member is configured to keep the retaining member at an engaging position where the retaining member engages with the unlock button.

In the locking device according to the present invention, the unlock button is kept at the pressing position through engagement of the retaining member with the unlock button, so that the locking member connected to the connector is kept in the unlocked state. In this way, a user, when releasing the locking of the connector by the locking device, may not necessarily press the unlock button all the time, which allows the detachment operation of the locking device and the connector to be easily performed.

Further, the housing is provided with a mounting channel fitted to the connector, and the retaining member has an abutting portion extending into the mounting channel, wherein, during mounting or detachment of the locking device and the connector, the abutting portion is capable of being pushed by the connector to cause the retaining member to disengage from the unlock button, to allow the unlock button to return to an initial position. Since the retaining member is provided with the abutting portion adapted to be pushed by the connector during the disassembly of the connector, so that the retaining member can disengage from the unlock button to return to the initial position, thereby not affecting the next locking of the locking member.

Further, a moving direction of the unlock button is perpendicular to a moving direction of the retaining member, which helps to make the structure of the locking device more compact.

Further, the mounting channel includes a first chute, the first chute is configured to be fitted to a first sliding rail on the connector, and the abutting portion extends into the first chute and is capable of being fitted to a positioning concave portion of the first sliding rail, and during the mounting or detachment of the locking device on or from the connector, the abutting portion is capable of being pushed by the first sliding rail of the connector to cause the retaining member to disengage from the unlock button. In this way, the user is not required to directly operate the unlock button, and the unlock button can automatically return to the initial position under the action of the first elastic member.

Further, the first chute has a first end that is an open end and a second end that is a closed end; and the locking member has a tongue portion configured to be fitted to the locking hole of the connector, the tongue portion cooperates with the second end of the first chute to limit movement of the first sliding rail of the connector relative to the first chute, so that the locking device and the connector mounted together may not slide relative to each other.

Further, the mounting channel further includes a second chute parallel to the first chute, the second chute is configured to be fitted to a second sliding rail on the connector, and the locking member is located between the first chute and the second chute. In this way, the assembly of the locking device and the connector is more stable and reliable.

Further, the second chute has a first end that is an open end and a second end that is a closed end; and the locking member has a tongue portion configured to be fitted to the locking hole of the connector, the tongue portion cooperates with the second end of the second chute to limit movement of the second sliding rail of the connector relative to the second chute, so that the locking device and the connector mounted together may not slide relative to each other.

Further, the abutting portion includes a protruding top extending into the first chute, a first pushing slope facing a pull-out direction of the first sliding rail, and a second pushing slope facing an insertion direction of the first sliding rail; or the abutting portion is in a shape of a circular arc. In this way, whether the first sliding rail is inserted into the first chute or pulled out from the first chute, the abutting portion can be easily pushed to exit the first chute, which enables the retaining member to disengage from the unlock button without affecting movement of the first sliding rail.

Further, the housing is provided with an inner cavity; a first end of the unlock button is a force bearing end, and a second end of the unlock button is located in the inner cavity; the retaining member is located in the inner cavity; and one of the unlock button and the retaining member is provided with a slot, and the other is provided with an engaging protrusion, the slot and the engaging protrusion engaging with each other to keep the unlock button at the pressing position. Thus, a simple engagement structure is provided for the unlock button and the retaining member.

Further, during the pressing of the unlock button and prior to the engagement of the slot with the engaging protrusion, the unlock button pushes, through an inclined pushing surface arranged on at least one of the unlock button and the retaining member, the retaining member to exit a moving path of the unlock button. In this way, the retaining member may not hinder downward movement of the unlock button.

Further, the retaining member includes a bottom, a first extension portion and a second extension portion. The first extension portion and the second extension portion extend from the bottom and are opposite each other; and the first chute passes between the first extension portion and the second extension portion. The abutting portion is located on the first extension portion, and the engaging protrusion is located on the second extension portion and deviates from the abutting portion, so as to provide a retaining member with a simple structure.

Further, the second elastic member is a spring, the bottom of the retaining member is provided with a mounting groove, a first end of the second elastic member is accommodated in the mounting groove, and a second end of the second elastic member extends away from the unlock button. The accommodation of at least part of the second elastic member in the mounting groove contributes to compactness of the structure of the locking device.

Further, a first end of the locking member is operably connected to the unlock button in the inner cavity, and a second end of the locking member is adapted to extend from the inner cavity. The inner cavity is provided with a first guide structure, a second guide structure and a third guide structure. The unlock button is in sliding fit with the first guide structure, the locking member is in sliding fit with the second guide structure, and the retaining member is in sliding fit with the third guide structure. Moving directions of the unlock button, the locking member and the retaining member are perpendicular to one another. Such layout contributes to the compactness of the structure of the locking device.

Further, the unlock button includes a pressing portion, a first arm and a second arm, the first arm and the second arm extend from the pressing portion and are opposite each other, and the locking member is located between the first arm and the second arm. The first arm is close to the retaining member and is provided with the slot. Thus, an unlock button with a simple structure is provided.

Further, each of the first arm and the second arm is provided with a third slope for contact with the locking member, and/or the locking member is provided with a fourth slope for contact with the first arm and the second arm respectively. The first elastic member is a spring, and the first elastic member abuts against and contacts the locking member. Thus, an operable connection manner simple in structure is provided for the unlock button and the locking member.

In another aspect, the present application further provides a locking structure, including the locking device described above and a connector configured to be fitted to the locking device, and the connector is provided with a locking hole fitted to a locking member of the locking device.

In yet another aspect, the present application further provides a child carrier, including a seat, a frame, and the locking structure described above. One of the seat and the frame is fitted with the locking device, and the other of the seat and the frame is fitted with the connector.

In a further aspect, the present application further provides a seat of a child carrier, including the locking device described above.

### BRIEF DESCRIPTION OF THE DRAWINGS

FIG. 1 schematically illustrates a perspective view of a seat of a child carrier according to an embodiment of the present application, which is provided with a locking device according to an embodiment of the present invention;
FIG. 2 schematically illustrates a perspective view of a frame of the child carrier according to an embodiment of the present application, which is provided with a connector configured to be fitted to the locking device according to an embodiment of the present invention;
FIG. 3 schematically illustrates a side view of the child carrier according to an embodiment of the present application, in which a locking device and a connector are joined together, and an unlock button is at an initial position;
FIG. 4 schematically illustrates a side view of the child carrier according to an embodiment of the present application, in which the unlock button is at a pressing position;
FIG. 5 schematically illustrates a sectional view of the locking device according to the present invention;
FIG. 6 schematically illustrates a front view of some parts in the child carrier according to an embodiment of the present application;
FIG. 7 schematically illustrates a perspective view of some parts of the child carrier according to an embodiment of the present application in one direction, in which the locking device and the connector located on a side of the child carrier are shown in a form of an exploded view;
FIG. 8 schematically illustrates a perspective view of some parts of the child carrier according to an embodiment of the present application in another direction, in which the locking device and the connector located on one side of the child carrier are shown in a form of an exploded view;
FIG. 9 schematically illustrates a perspective view of an unlock button in the locking device according to an embodiment of the present invention;
FIG. 10 schematically illustrates a perspective view of a locking member in the locking device according to an embodiment of the present invention; and
FIG. 11 schematically illustrates a perspective view of a retaining member in the locking device according to an embodiment of the present invention.

### DETAILED DESCRIPTION OF THE EMBODIMENTS

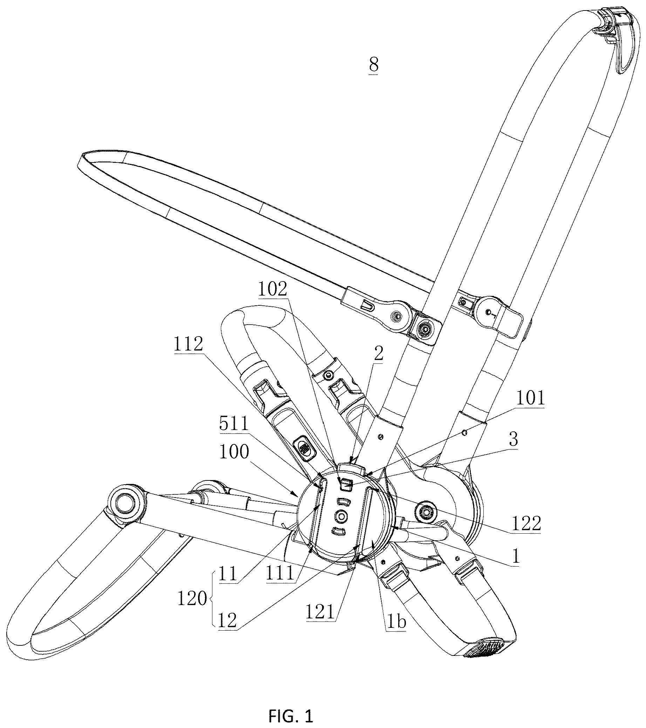

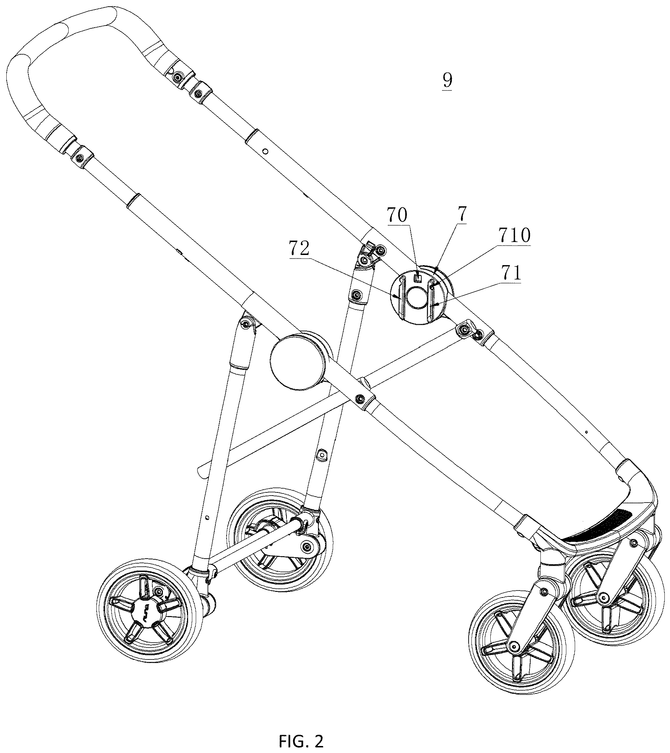

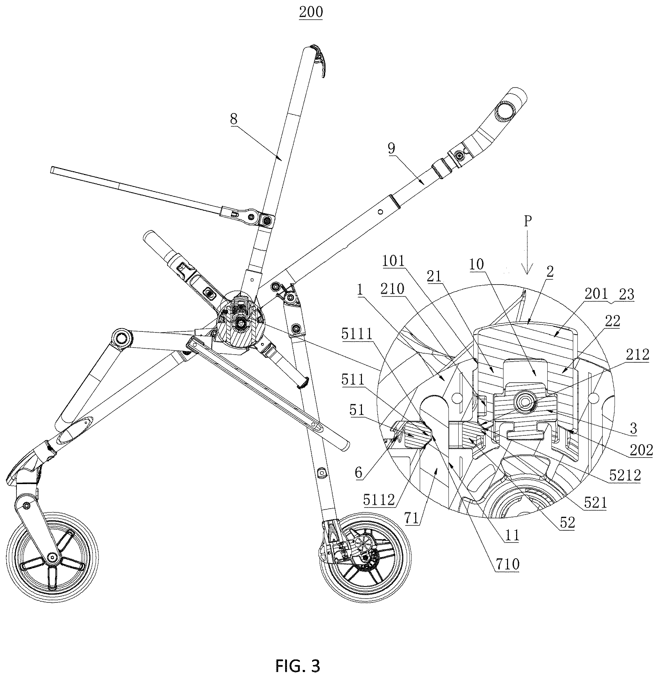

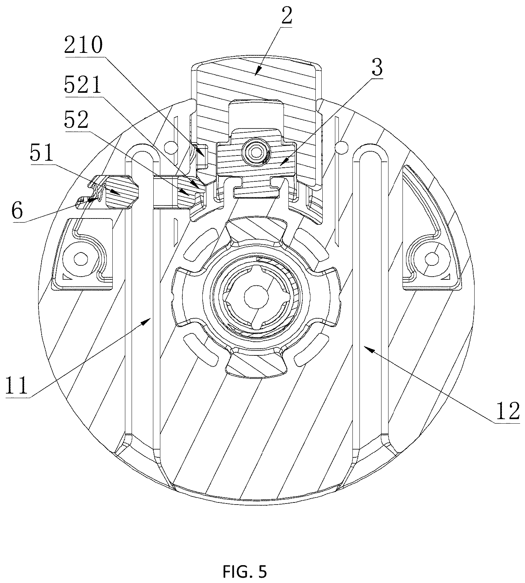

FIG. 1 illustrates a structure of a seat 8 of a child carrier 200 (see FIG. 3) according to an embodiment of the present application. The seat 8 is provided with a locking device 100 according to an embodiment of the present invention. FIG. 2 illustrates a structure of a frame 9 of the child carrier 200 according to an embodiment of the present application. The frame 9 is provided with a connector 7 configured to be locked with and fitted to the locking device 100. FIG. 3 to FIG. 8 illustrate a structure of the child carrier 200 assembled by the seat 8 and the frame 9. As can be seen from the figures, the child carrier 200 in the embodiments of the present application is illustrated as a stroller. It may be understood that the type of the child carrier 200 is not limited to the stroller. For example, in other embodiments, the child carrier 200 may be a high chair, a baby hammock, or the like. In addition, a range of application of the locking device 100 according to the embodiments of the present invention is not limited to the child carrier 200. The locking device 100 may also applied to any suitable product.

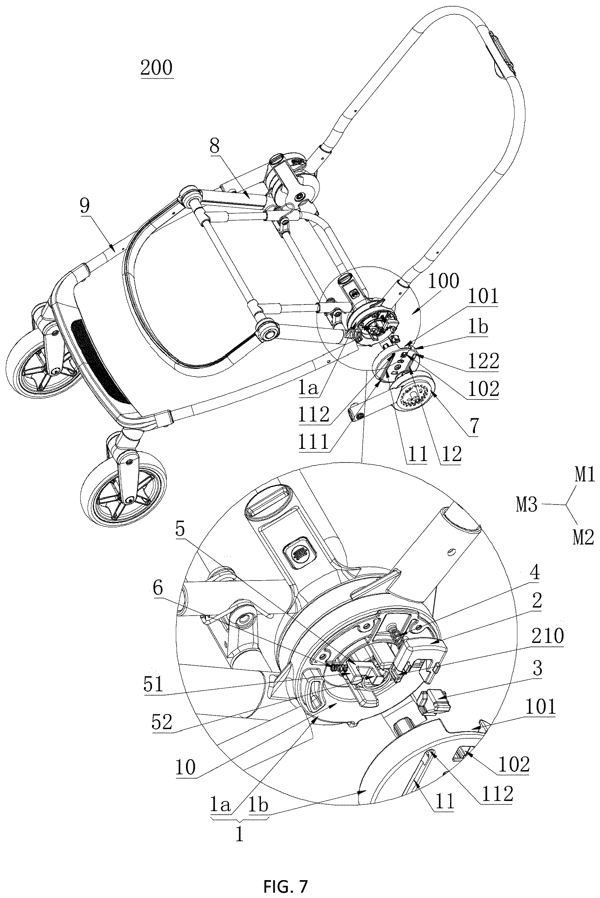

Referring to FIG. 1 and FIG. 7 together, the locking device 100 includes: a housing 1; and an unlock button 2, a locking member 3, a first elastic member 4, a retaining member 5 and a second elastic member 6 that are mounted on the housing 1.

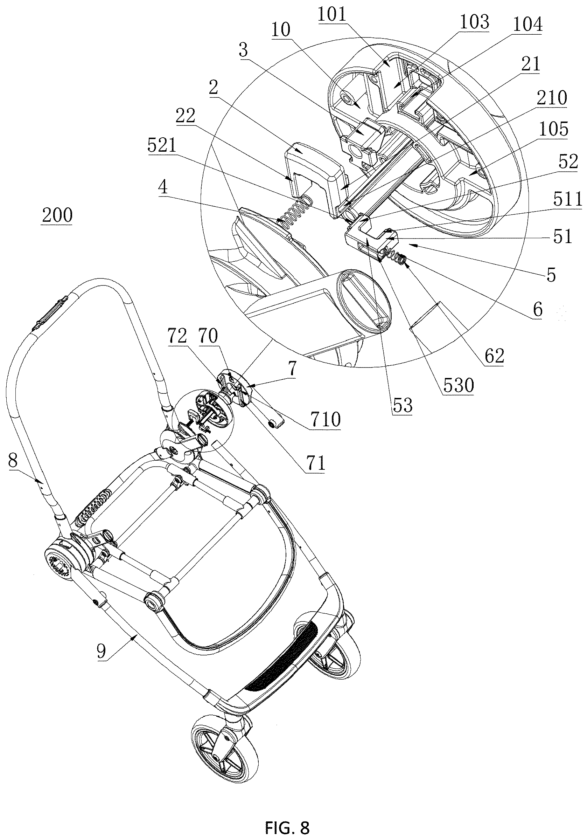

Referring to FIG. 7 and FIG. 8 together, in some embodiments, the housing 1 may include a first housing portion 1a and a second housing portion 1b, which define an inner cavity 10. The housing 1 may be provided with a first opening 101 and a second opening 102. The first opening 101 is jointly defined by, for example, a sidewall of the first housing portion 1a and a sidewall of the second housing portion 1b. The second opening 102 is arranged on, for example, an end wall of the second housing portion 1b facing the connector 7. Referring to FIG. 1 and FIG. 2 together, the housing 1 may be further provided with a mounting channel 120 fitted to the connector 7. In some embodiments, the mounting channel 120 may include, for example, a first chute 11 and a second chute 12 arranged in parallel. The second opening 102 may be arranged between the first chute 11 and the second chute 12. The connector 7 may be provided with a first sliding rail 71 in sliding fit with the first chute 11 and a second sliding rail 72 in sliding fit with the second chute 12. The connector 7 is further provided with a locking hole 70 opposite the second opening 102. The locking hole 70 is correspondingly located between the first sliding rail 71 and the second sliding rail 72.

Referring to FIG. 3, a first end 201 of the unlock button 2 is a force bearing end. When the unlock button 2 is at an initial position (a position where the unlock button is not pressed), the first end 201 of the unlock button 2 is located, for example, outside the housing 1. A second end 202 of the unlock button 2 extends into the inner cavity 10 through the first opening 101.

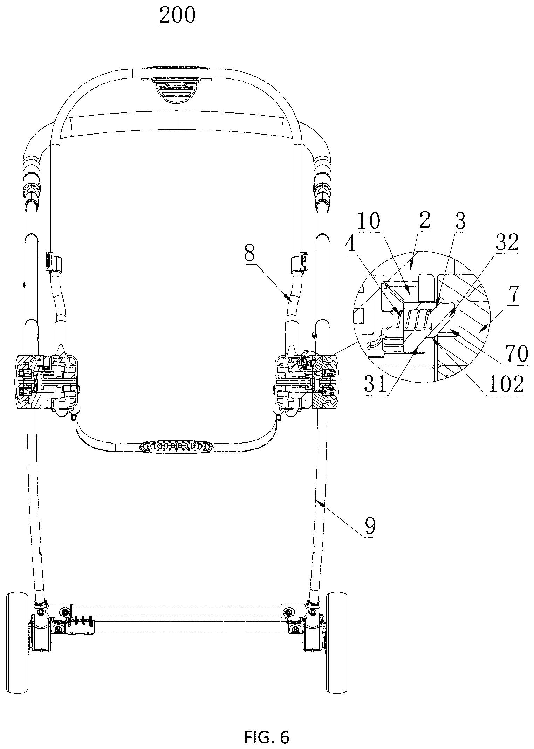

Referring to FIG. 6, a first end 31 of the locking member 3 is operably connected to the unlock button 2 in the inner cavity 10, and a second end 32 of the locking member 3 can extend from the second opening 102 to be locked with and fitted to the locking hole 70 of the connector 7. It may be understood that the locking member 3 has a locked state in which the second end 32 thereof extends from the second opening 102 and an unlocked state in which the second end retracts from the second opening 102. When the locking member 3 is in the locked state, the connector 7 and the locking device 100 are locked to prevent relative movement of the connector 7 and the locking device 100.

In some embodiments, the relative movement of the connector 7 and the locking device 100 may be prevented only through a cooperation between the locking member 3 and the locking hole 70. In some other embodiments, referring to FIG. 1, FIG. 6 and FIG. 7, a first end 111 of the first chute 11 may be an open end, and a second end 112 of the first chute 11 may be a closed end. A first end 121 of the second chute 12 may be an open end, and a second end 122 of the second chute 12 may be a closed end. The second end 32 of the locking member 3 has a tongue portion. It may be understood that, in a specific example, the tongue portion has a wedge-shaped surface. When the locking device 100 is mounted to the connector 7, the first sliding rail 71 and the second sliding rail 72 of the connector 7 are inserted into the first chute 11 from the first end 111 and into the second chute 12 from the first end 121, respectively. When the first sliding rail 71 and the second sliding rail 72 move to abut against the second end 112 of the first chute 11 and the second end 122 of the second chute 12, respectively, the tongue portion of the locking member 3 extends into the locking hole 70 of the connector 7. In this case, the second end 112 of the first chute 11 and the second end 122 of the second chute 12 cooperate with the tongue portion to prevent the relative movement of the connector 7 and the locking device 100, so that movement of the first sliding rail 71 and the second sliding rail 72 of the connector 7 relative to the first chute 11 and the second chute 12 is limited.

It is to be noted that, in this embodiment, the mounting channel 120 may include a first chute 11 and a second chute 12. It may be understood that, in some embodiments, the mounting channel 120 may not be provided with the second chute 12 through reasonable arrangement of positions of the first chute 11, the second opening 102 and the locking member 3. Accordingly, the connector 7 may not be provided with the second sliding rail 72. In addition, the second end 112 of the first chute 11 and the second end 122 of the second chute 12 may not be closed ends. For example, in some embodiments, position-limiting protrusions may be arranged respectively near the second end 112 of the first chute 11 and the second end 122 of the second chute 12. Movement of the first sliding rail 71 and the second sliding rail 72 is stopped through such position-limiting protrusions.

Referring to FIG. 6, the first elastic member 4 is configured to keep the locking member 3 in a locked state, and the unlock button 2 applies unlock force to the locking member 3 when pressed, so that the locking member 3 can overcome the force of the first elastic member 4 and retract from the second opening 102, till moving to an unlocked state in which the second end 32 of the locking member 3 disengages from the locking hole 70, thereby releasing the locking of the connector 7 by the locking device 100.

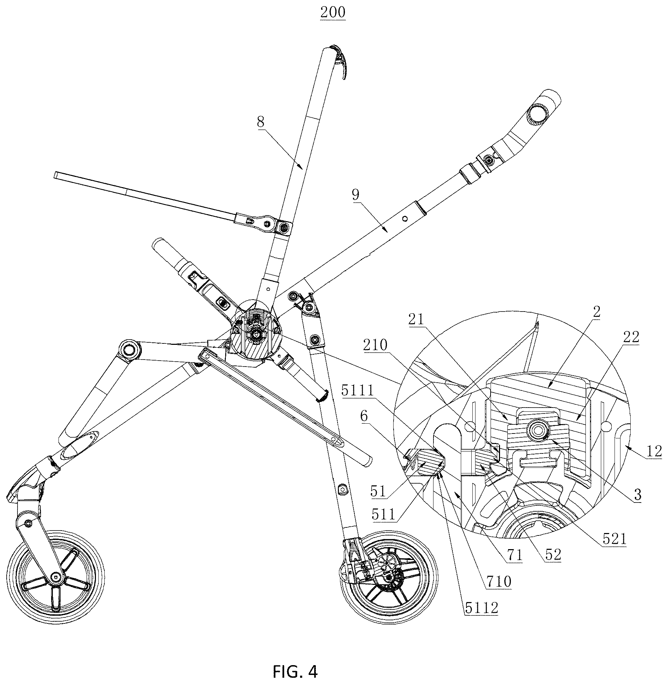

As can be known in combination with the related art, the unlock button 2 may be operably connected to the locking member 3 through any suitable structure, provided that the unlock button 2 and the locking member 3 satisfy the following relationship: when the unlock button 2 is at the initial position where it is not pressed, the second end 32 of the locking member 3 extends out and is engaged with the locking hole 70 of the connector 7; when there is a need to disengage the second end 32 of the locking member 3 from the locking hole 70 of the connector 7, the unlock button 2 is pressed along a direction marked by an arrow P in FIG. 3, and the unlock button 2 can drive the locking member 3 to move while moving under force, so that the second end 32 of the locking member 3 is detached from the locking hole 70 of the connector 7. In some embodiments, a moving direction of the unlock button 2 is perpendicular to a moving direction of the locking member 3. For example, referring to FIG. 3 and FIG. 4, in this embodiment, the moving direction of the unlock button 2 is the radial direction, while the moving direction of the locking member 3 is the axial direction. According to the locking device in the prior art, when the user no longer presses the unlock button 2, the locking member 3 directly returns to the locked state and the unlock button 2 directly returns to the initial position under the action of the first elastic member 4.

Referring to FIG. 4, FIG. 7 and FIG. 8, the retaining member 5 may be accommodated in the inner cavity 10. When the unlock button 2 moves from the initial position to the pressing position, the retaining member 5 can engage with the unlock button 2, so that the unlock button 2 is kept at the pressing position where the locking member 3 is unlocked. In some embodiments, the unlock button 2 may be provided with a slot 210, and the retaining member 5 may be provided with an engaging protrusion 521. The slot 210 and the engaging protrusion 521 engage with each other when the unlock button 2 is at the pressing position. In other words, the slot 210 and the engaging protrusion 521 engage with each other to keep the unlock button 2 at the pressing position. It may be understood that the manner in which the retaining member 5 and the unlock button 2 engage with each other is not limited to the above examples. For example, in some embodiments, the unlock button 2 may be provided with an engaging protrusion, and the retaining member 5 may be provided with a slot engage with the engaging protrusion.

Referring to FIG. 4, the second elastic member 6 is configured to keep the retaining member 5 at the engaging position where the retaining member 5 engages with the unlock button 2. In this way, when there is a need to release the locking of the connector 7 by the locking device 100 to separate the connector 7 and the locking device 100, the user may not necessarily press the unlock button 2 all the time.

Referring to FIG. 1 and FIG. 3, the retaining member 5 has an abutting portion 511 extending into the mounting channel 120. During the mounting or detachment of the connector 7 on or from the locking device 100, the abutting portion 511 can be pushed by the connector 7, so that the retaining member 5 can overcome the force of the second elastic member 6 and disengage from the unlock button 2. In this way, the user is not required to directly operate the unlock button 2, and the unlock button 2 can automatically return to the initial position under the action of the first elastic member 4.

It may be understood in combination with the above that, after the unlock button 2 returns to the initial position, the retaining member 5 returns to a moving path of the unlock button 2 under the action of the second elastic member 6 (see FIG. 3). When the unlock button 2 is pressed again to move downwards and prior to the engagement of the slot 210 with the engaging protrusion 521, the unlock button 2 may drive the retaining member 5, so that the retaining member 5 can overcome the force of the second elastic member 6 and retract. In this way, the retaining member 5 exits the moving path of the unlock button 2, thereby no longer hindering the downward movement of the unlock button 2. After the unlock button 2 reaches the pressing position, the retaining member 5 is driven by the second elastic member 6 to extend out, and engages with the unlock button 2 through the engagement of the engaging protrusion 521 with the slot 210. Referring to FIG. 3, in some embodiments, a first inclined pushing surface 212 may be arranged on the unlock button 2, and a second inclined pushing surface 5212 may be arranged on the retaining member 5. During the pressing of the unlock button 2, the first inclined pushing surface 212 and the second inclined pushing surface 5212 abut against each other, so that the unlock button 2 can push the retaining member 5 to exit the moving path of the unlock button 2.

Referring to FIG. 1 to FIG. 3 together, in some embodiments, the abutting portion 511 may extend into the first chute 11 of the mounting channel 120. In addition, the first sliding rail 71 of the connector 7 may be provided with a positioning concave portion 710. When the connector 7 and the locking device 100 are mounted together, the abutting portion 511 is fitted to the positioning concave portion 710 so as not to affect the engagement of the retaining member 5 with the unlock button 2. During the mounting or detachment of the connector 7 on or from the locking device 100, the first sliding rail 71 moves relative to the first chute 11, and the first sliding rail 71 may push the abutting portion 511 to move, so that the engaging protrusion 521 of the retaining member 5 disengages from the slot 210 of the unlock button 2.

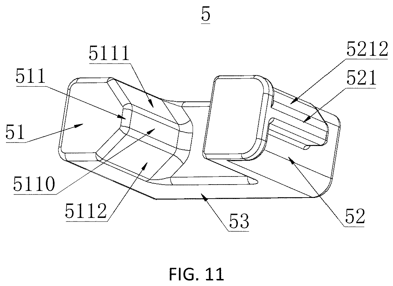

Referring to FIG. 3, the abutting portion 511 may be roughly in a shape of a trapezoid, including a protruding top 5110 (referring to FIG. 11) extending into the first chute 11, a first pushing slope 5111 facing a pull-out direction of the first sliding rail 71, and a second pushing slope 5112 facing an insertion direction of the first sliding rail 71. Accordingly, the positioning concave portion 710 of the first sliding rail 71 may be in a shape of a trapezoid matching the shape of the abutting portion 511. In some embodiments, the abutting portion 511 may be, for example, in a shape of a circular arc. In this case, the positioning concave portion 710 of the first sliding rail 71 is also in a shape of a circular arc correspondingly.

Referring to FIG. 7 and FIG. 8 together, in some embodiments, a moving direction M1 of the unlock button 2 is roughly perpendicular to a moving direction M3 of the retaining member 5. Preferably, the moving direction M1 of the unlock button 2, a moving direction M2 of the locking member 3 and the moving direction M3 of the retaining member 5 are roughly perpendicular to one another. Such layout contributes to the compactness of the structure of the locking device 100. For example, the inner cavity 10 of the housing 1 may be provided with a first guide structure 103, a second guide structure 104 and a third guide structure 105. The unlock button 2 is in sliding fit with the first guide structure 103, the locking member 3 is in sliding fit with the second guide structure 104, and the retaining member 5 is in sliding fit with the third guide structure 105.

Referring to FIG. 7, FIG. 8 and FIG. 11 together, a preferred implementation of the retaining member 5 is shown in this embodiment. The retaining member 5 may include a bottom 53, a first extension portion 51 and a second extension portion 52. The first extension portion 51 and the second extension portion 52 extend from the bottom 53 and are opposite each other. The first chute 11 passes between the first extension portion 51 and the second extension portion 52. The abutting portion 511 is located on the first extension portion 51, and the engaging protrusion 521 is located on the second extension portion 52 and deviates from the first chute 11. The second elastic member 6 may be a spring, the bottom 53 of the retaining member 5 may be provided with a mounting groove 530, a first end of the second elastic member 6 is accommodated in the mounting groove 530, and a second end 62 of the second elastic member 6 extends away from the unlock button 2. The second end 62 of the second elastic member 6, for example, abuts against a cavity wall of the inner cavity 10.

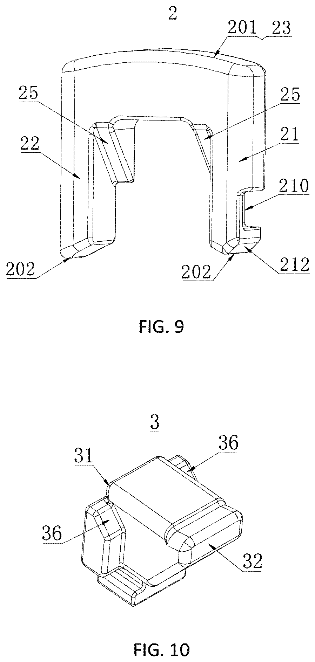

Referring to FIG. 7 to FIG. 10 together, preferred implementations of the unlock button 2 and the locking member 3 are further shown in this embodiment. The unlock button 2 may include a pressing portion 23, a first arm 21 and a second arm 22. The first arm 21 and the second arm 22 extend from the pressing portion 23 and are opposite each other. The pressing portion 23 is located at the first end 201 of the unlock button 2, and tail ends of the first arm 21 and the second arm 22 form the second end 202 of the unlock button 2. The locking member 3 is located between the first arm 21 and the second arm 22. The first arm 21 is arranged close to the retaining member 5 and is provided with the slot 210, and the second arm 22 may be arranged away from the retaining member 5. Each of the first arm 21 and the second arm 22 is provided with a third slope 25 for contact with the locking member 3, and the locking member 3 is provided with a fourth slope 36 for contact with the first arm 21 and the second arm 22 respectively. In this embodiment, the third slopes 25 and the fourth slope 36 are in sliding fit. It may be understood that, in other embodiments, the third slopes 25 and the fourth slope 36 may be arranged alternatively, which can also realize an operable connection between the unlock button 2 and the locking member 3. The first elastic member 4 may be a spring. The first elastic member 4 has one end, for example, pressing against the locking member 3 and the other end, for example, abutting against the cavity wall of the inner cavity 10.

An embodiment of the present application further provides a locking device 100. The locking device includes a housing 1; the locking device 100 further includes an unlock button 2, a locking member 3 and a first elastic member 4 that are disposed on the housing 1. The locking member 3 is configured to be locked with and fitted to a locking hole 70 in a connector 7. The first elastic member 4 is configured to keep the locking member 3 in a locked state. The unlock button 2 drives the locking member 3 to an unlocked state when pressed. The locking device 100 further includes a retaining member5 and a second elastic member 6 that are disposed on the housing 1. The retaining member 5 is configured to engage with the unlock button 2 to keep the unlock button 2 at a pressing position where the locking member 3 is unlocked, and the second elastic member 6 is configured to keep the retaining member 5 at an engaging position where the retaining member 5 engages with the unlock button 2.

An embodiment of the present application further provides a locking structure. The locking structure includes the locking device 100 described above and the connector 7 described above. After the sliding rail (for example, including the first sliding rail 71 and the second sliding rail 72) of the connector 7 is inserted into the mounting channel 120 of the locking device 100 (for example, including the first chute 11 and the second chute 12), the locking member 3 of the locking device 100 is inserted into the locking hole 70 of the connector 7, so that the locking device 100 is securely connected to the connector 7.

An embodiment of the present application further provides a child carrier 200. The child carrier 200 includes a seat 8 and a frame 9, and the locking structure described above. One of the seat 8 and the frame 9 is fitted with the locking device 100, and the other is fitted with the connector 7.

A disassembly and assembly process of the seat 8 and the frame 9 in the child carrier 200 with the locking structure according to this embodiment of the present application is described in detail below with reference to FIG. 1 to FIG. 5.

During assembling, the seat 8 and the frame 9 are aligned with each other, and the first sliding rail 71 and the second sliding rail 72 are inserted into the first chute 11 and the second chute 12, until the locking member 3 is inserted into the locking hole 70. Referring to FIG. 3, in this case, the unlock button 2 is at the initial position, the second end of the locking member 3 is inserted into the locking hole 70, and the abutting portion 511 extends into the positioning concave portion 710.

During disassembling, referring to FIG. 4, the unlock button 2 is pressed downwards, and the unlock button 2 pushes the locking member 3 to retract, so that the locking member 3 exits the locking hole 70. The unlock button 2 simultaneously pushes the retaining member 5 to retract. When the unlock button 2 moves to a pressing position where the slot 210 is aligned with the engaging protrusion 521 of the retaining member 5, under the action of the second elastic member 6, the engaging protrusion 521 of the retaining member 5 is inserted into the slot 210, so that the unlock button 2 is kept at the pressing position, and the locking member 3 is kept in the unlocked state in which the locking member 3 is detached from the locking hole 70. In this case, the seat 8 can be detached from the frame 9 by lifting the seat 8. During the detachment of the seat 8, the first sliding rail 71 pushes the first pushing slope 5111 to move, so that the engaging protrusion 521 retracts from the slot 210 and disengages from the slot 210, the unlock button 2 returns to the initial position under the action of the first elastic member 4 (in this case, the second end 32 of the locking member 3 has been detached from the locking hole 70, and even if the second end 32 of the locking member 3 extends outwards again after the unlock button 2 returns, the second end 32 of the locking member 3 cannot engage with the locking hole 70, and thus the detachment of the seat 8 is not affected). After the seat 8 is detached from the frame 9, the unlock button 2 and the retaining member 5 return to the positions shown in FIG. 8.

After the seat 8 is detached from the frame 9, the unlock button 2 may be mistakenly pressed and kept by the retaining member 5 at the pressing position where the locking member 3 is unlocked. However, when the seat 8 is mounted to the frame 9 again, during the insertion of the first sliding rail 71 into the first chute 11, the first sliding rail 71 may drive the second pushing slope 5112 of the retaining member 5 to move, so that the engaging protrusion 521 retracts from the slot 210 and disengages from the slot 210, and the unlock button 2 can return to the initial position, so as not to affect the next pressing of the unlock button 2.

## Claims

1. A locking device (100), including: a housing (1); and an unlock button (2), a locking member (3) and a first elastic member (4) that are disposed on the housing (1), the locking member (3) being configured to be locked with and fitted to a locking hole (70) in a connector (7), the first elastic member (4) being configured to keep the locking member (3) in a locked state, the unlock button (2) driving the locking member (3) to an unlocked state when pressed, wherein:
the locking device (100) further includes a retaining member (5) and a second elastic member (6) that are disposed on the housing (1),
the retaining member (5) is configured to engage with the unlock button (2) to keep the unlock button (2) at a pressing position where the locking member (3) is unlocked, and the second elastic member (6) is configured to keep the retaining member (5) at an engaging position where the retaining member (5) engages with the unlock button (2).

2. The locking device (100) according to claim 1, wherein the housing (1) is provided with a mounting channel (120) fitted to the connector (7), and the retaining member (5) has an abutting portion (511) extending into the mounting channel (120), wherein, during mounting or detachment of the locking device (100) and the connector (7), the abutting portion (511) is capable of being pushed by the connector (7) to cause the retaining member (5) to disengage from the unlock button (2), to allow the unlock button (2) to return to an initial position.

3. The locking device (100) according to claim 1 or 2, wherein a moving direction of the unlock button (2) is perpendicular to a moving direction of the retaining member (5).

4. The locking device (100) according to claim 2, optionally in combination with claim 3, wherein:
the mounting channel (120) includes a first chute (11), wherein the first chute (11) is configured to be fitted to a first sliding rail (71) on the connector (7), and the abutting portion (511) extends into the first chute (11) and is capable of being fitted to a positioning concave portion (710) of the first sliding rail (71), and
during the mounting or detachment of the locking device (100) and the connector (7), the abutting portion (511) is capable of being pushed by the first sliding rail (71) of the connector (7) to cause the retaining member (5) to disengage from the unlock button (2).

5. The locking device (100) according to claim 4, wherein:
the first chute (11) includes a first end (111) that is an open end and a second end (112) that is a closed end; and
the locking member (3) includes a tongue portion configured to be fitted to the locking hole (70) of the connector (7), and the tongue portion cooperates with the second end (112) of the first chute (11) to limit movement of the first sliding rail (71) of the connector (7) relative to the first chute (11).

6. The locking device (100) according to claim 4 or 5, wherein:
the mounting channel (120) further includes a second chute (12) parallel to the first chute (11), wherein the second chute (12) is configured to be fitted to a second sliding rail (72) on the connector (7), and the locking member (3) is located between the first chute (11) and the second chute (12); wherein, optionally the second chute (12) has a first end that is an open end and a second end (62) that is a closed end; and the locking member (3) has a tongue portion configured to be fitted to the locking hole (70) of the connector (7), the tongue portion cooperates with the second end of the second chute (12) to limit movement of the second sliding rail (72) of the connector (7) relative to the second chute (12).

7. The locking device (100) according to any one of claims 4 to 6, wherein:
the abutting portion (511) includes a protruding top (5110) extending into the first chute (11), a first pushing slope (5111) facing a pull-out direction of the first sliding rail (71), and a second pushing slope (5112) facing an insertion direction of the first sliding rail (71); or
the abutting portion (511) is in a shape of a circular arc.

8. The locking device (100) according to any one of claims 1 to 7, wherein:
the housing (1) is provided with an inner cavity (10);
a first end (201) of the unlock button (2) is a force bearing end, and a second end (202) of the unlock button (2) is located in the inner cavity (10);
the retaining member (5) is located in the inner cavity (10); and
one of the unlock button (2) and the retaining member (5) is provided with a slot (210), and the other is provided with an engaging protrusion (521), the slot (210) and the engaging protrusion (521) engage with each other to keep the unlock button (2) at the pressing position.

9. The locking device (100) according to claim 8, wherein:
during the pressing of the unlock button (2) and prior to the engagement of the slot (210) with the engaging protrusion (521), the unlock button (2) pushes, through an inclined pushing surface (5212) arranged on at least one of the unlock button (2) and the retaining member (5), the retaining member (5) to exit a moving path of the unlock button (2).

10. The locking device (100) according to claim 8 or 9 in combination with any one of claims 4 to 7, wherein:
the retaining member (5) includes a bottom (53), a first extension portion (51) and a second extension portion (52), the first extension portion (51) and the second extension portion (52) extend from the bottom (53) and are opposite each other, and the first chute (11) passes between the first extension portion (51) and the second extension portion (52), and
the abutting portion (511) is located on the first extension portion (51), and the engaging protrusion (521) is located on the second extension portion (52) and deviates from the abutting portion (511).

11. The locking device (100) according to claim 10, wherein the second elastic member (6) is a spring, the bottom (53) of the retaining member (5) is provided with a mounting groove (530), a first end of the second elastic member (6) is accommodated in the mounting groove (530), and a second end of the second elastic member (6) extends away from the unlock button (2).

12. The locking device (100) according to any one of the claims 8 to 11, wherein:
a first end (31) of the locking member (3) is operably connected to the unlock button (2) in the inner cavity (10), and a second end (32) of the locking member (3) is adapted to extend from the inner cavity (10);
the inner cavity (10) is provided with a first guide structure (103), a second guide structure (104) and a third guide structure (105);
the unlock button (2) is in sliding fit with the first guide structure (103), the locking member (3) is in sliding fit with the second guide structure (104), and the retaining member (5) is in sliding fit with the third guide structure (105); and
moving directions of the unlock button (2), the locking member (3) and the retaining member (5) are perpendicular to one another.

13. The locking device (100) according to any one of claims 8 to 12, wherein the unlock button (2) includes a pressing portion (23), a first arm (21) and a second arm (22), the first arm (21) and the second arm (22) extend from the pressing portion (23) and are opposite each other, and the locking member (3) is located between the first arm (21) and the second arm (22), and the first arm (21) is arranged close to the retaining member (5) and is provided with the slot (210).

14. The locking device (100) according to claim 13, wherein:
each of the first arm (21) and the second arm (22) is provided with a third slope for contact with the locking member (3), and/or the locking member (3) is provided with a fourth slope for contact with the first arm (21) and the second arm (22) respectively, and
the first elastic member (4) is a spring, and the first elastic member (4) abuts against and contacts the locking member (3).

15. The locking device (100) of any one of claims 1 to 14, wherein a moving direction of the unlock button (2), a moving direction of the locking member (3), and a moving direction of the retaining member (5) are perpendicular to one another.

## Patentansprüche

1. Verriegelungsvorrichtung (100), umfassend: ein Gehäuse (1); und einen Entriegelungsknopf (2), ein Verriegelungselement (3) und ein erstes elastisches Element (4), die an dem Gehäuse (1) angeordnet sind, wobei das Verriegelungselement (3) dazu eingerichtet ist, mit einem Verriegelungsloch (70) in einem Verbinder (7) verriegelt und in das Verriegelungsloch (70) eingepasst zu werden, wobei das erste elastische Element (4) dazu eingerichtet ist, das Verriegelungselement (3) in einem verriegelten Zustand zu halten, wobei der Entriegelungsknopf (2) das Verriegelungselement (3) in einen entriegelten Zustand treibt, wenn er gedrückt wird, wobei:
die Verriegelungsvorrichtung (100) ferner ein Halteelement (5) und ein zweites elastisches Element (6) umfasst, die an dem Gehäuse (1) angeordnet sind,
das Halteelement (5) dazu eingerichtet ist, an dem Entriegelungsknopf (2) anzugreifen, um den Entriegelungsknopf (2) in einer drückenden Position zu halten, in der das Verriegelungselement (3) entriegelt ist, und das zweite elastische Element (6) dazu eingerichtet ist, das Halteelement (5) in einer Eingriffsposition zu halten, in der das Halteelement (5) an dem Entriegelungsknopf angreift.

2. Verriegelungsvorrichtung (100) nach Anspruch 1, wobei das Gehäuse (1) mit einem Anbringungskanal (120) versehen ist, der an den Verbinder (7) angepasst ist, und das Halteelement (5) einen Anschlagabschnitt (511) aufweist, der sich in den Anbringungskanal (120) erstreckt, wobei während des Anbringens oder Lösens der Verriegelungsvorrichtung (100) und des Verbinders (7) der Anschlagabschnitt (511) durch den Verbinder (7) gedrückt werden kann, um zu bewirken, dass sich das Halteelement (5) von dem Entriegelungsknopf (2) löst, um zu ermöglichen, dass der Entriegelungsknopf (2) in eine Ausgangsposition zurückkehrt.

3. Verriegelungsvorrichtung (100) nach Anspruch 1 oder 2, wobei eine Bewegungsrichtung des Entriegelungsknopfs (2) senkrecht zu einer Bewegungsrichtung des Halteelements (5) ist.

4. Verriegelungsvorrichtung (100) nach Anspruch 2, optional in Kombination mit Anspruch 3, wobei:
der Anbringungskanal (120) eine erste Rinne (11) umfasst, wobei die erste Rinne (11) eingerichtet ist, um an eine erste Gleitschiene (71) an dem Verbinder (7) angelegt zu werden, und der Anschlagabschnitt (511) sich in die erste Rinne (11) erstreckt und dazu eingerichtet ist, in einen konkaven Positionierungsabschnitt (710) der ersten Gleitschiene (71) eingepasst zu werden, und
während des Anbringens oder Lösens der Verriegelungsvorrichtung (100) und des Verbinders (7) der Anschlagabschnitt (511) durch die erste Gleitschiene (71) des Verbinders (7) gedrückt werden kann, um zu bewirken, dass sich das Halteelement (5) von dem Entriegelungsknopf (2) löst.

5. Verriegelungsvorrichtung (100) nach Anspruch 4, wobei:
die erste Rinne (11) ein erstes Ende (111), das ein offenes Ende ist, und ein zweites Ende (112), das ein geschlossenes Ende ist, umfasst; und
das Verriegelungselement (3) einen Zungenabschnitt umfasst, der dazu eingerichtet ist, an das Verriegelungsloch (70) des Verbinders (7) angelegt zu werden, und der Zungenabschnitt mit dem zweiten Ende (112) der ersten Rinne (11) zusammenwirkt, um eine Bewegung der ersten Gleitschiene (71) des Verbinders (7) relativ zu der ersten Rinne (11) zu begrenzen.

6. Verriegelungsvorrichtung (100) nach Anspruch 4 oder 5, wobei der Anbringungskanal (120) ferner eine zweite Rinne (12) parallel zu der ersten Rinne (11) umfasst, wobei die zweite Rinne (12) dazu eingerichtet ist, an eine zweite Gleitschiene (72) an dem Verbinder (7) angelegt zu werden, und wobei das Verriegelungselement (3) zwischen der ersten Rinne (11) und der zweiten Rinne (12) angeordnet ist;
wobei optional:
die zweite Rinne (12) ein erstes Ende, das ein offenes Ende ist, und ein zweites Ende (62), das ein geschlossenes Ende ist, aufweist; und
das Verriegelungselement (3) einen Zungenabschnitt aufweist, der dazu eingerichtet ist, an das Verriegelungsloch (70) des Verbinders (7) angelegt zu werden, wobei der Zungenabschnitt mit dem zweiten Ende der zweiten Rinne (12) zusammenwirkt, um eine Bewegung der zweiten Gleitschiene (72) des Verbinders (7) relativ zu der zweiten Rinne (12) zu begrenzen.

7. Verriegelungsvorrichtung (100) nach einem der Ansprüche 4 bis 6, wobei:
der Anschlagabschnitt (511) eine vorstehende Oberseite (5110), die sich in die erste Rinne (11) erstreckt, eine erste Drückschräge (5111), die einer Auszugsrichtung der ersten Gleitschiene (71) zugewandt ist, und eine zweite Drückschräge (5112), die einer Einführrichtung der ersten Gleitschiene (71) zugewandt ist, umfasst; oder
der Anschlagabschnitt (511) eine Form eines Kreisbogens aufweist.

8. Verriegelungsvorrichtung (100) nach einem der Ansprüche 1 bis 7, wobei:
das Gehäuse (1) mit einem inneren Hohlraum (10) versehen ist;
ein erstes Ende (201) des Entriegelungsknopfs (2) ein krafttragendes Ende ist und ein zweites Ende (202) des Entriegelungsknopfs (2) in dem inneren Hohlraum angeordnet ist;
das Halteelement (5) in dem inneren Hohlraum (10) angeordnet ist; und
einer von dem Entriegelungsknopf (2) und dem Halteelement (5) mit einem Schlitz (210) versehen ist und der andere von dem Entriegelungsknopf (2) und dem Halteelement (5) mit einem Eingriffsvorsprung (521) versehen ist, wobei der Schlitz (210) und der Eingriffsvorsprung (521) miteinander eingreifen, um den Entriegelungsknopf (2) in der drückenden Position zu halten.

9. Verriegelungsvorrichtung (100) nach Anspruch 8, wobei während des Drückens des Entriegelungsknopfs (2) und vor dem Eingriff des Schlitzes (210) mit dem Eingriffsvorsprung (521) der Entriegelungsknopf (2) durch eine geneigte drückende Oberfläche (5212), die an mindestens einem von dem Entriegelungsknopf (2) und dem Halteelement (5) angeordnet ist, das Halteelement (5) drückt, um einen Bewegungsweg des Entriegelungsknopfs (2) zu verlassen.

10. Verriegelungsvorrichtung (100) nach Anspruch 8 oder 9 in Kombination mit einem der Ansprüche 4 bis 7, wobei:
das Halteelement (5) einen Boden (53), einen ersten Verlängerungsabschnitt (51) und einen zweiten Verlängerungsabschnitt (52) umfasst, wobei der erste Verlängerungsabschnitt (51) und der zweite Verlängerungsabschnitt (52) sich von dem Boden (53) erstrecken und einander gegenüberliegen, und wobei die erste Rinne (11) zwischen dem ersten Verlängerungsabschnitt (51) und dem zweiten Verlängerungsabschnitt (52) verläuft, und wobei der Anschlagabschnitt (511) an dem ersten Verlängerungsabschnitt (51) angeordnet ist und der Eingriffsvorsprung (521) an dem zweiten Verlängerungsabschnitt (52) angeordnet ist und von dem Anschlagabschnitt (511) abweicht.

11. Verriegelungsvorrichtung (100) nach Anspruch 10, wobei das zweite elastische Element (6) eine Feder ist, der Boden (53) des Halteelements (5) mit einer Montagenut (530) versehen ist, ein erstes Ende des zweiten elastischen Elements (6) in der Montagenut (530) aufgenommen ist und sich ein zweites Ende des zweiten elastischen Elements (6) von dem Entriegelungsknopf (2) weg erstreckt.

12. Verriegelungsvorrichtung (100) nach einem der Ansprüche 8 bis 11, wobei:
ein erstes Ende (31) des Verriegelungselements (3) mit dem Entriegelungsknopf (2) in dem inneren Hohlraum (10) wirkverbunden ist und ein zweites Ende (32) des Verriegelungselements (3) dazu eingerichtet ist, sich von dem inneren Hohlraum (10) zu erstrecken;
der innere Hohlraum (10) mit einer ersten Führungsstruktur (103), einer zweiten Führungsstruktur (104) und einer dritten Führungsstruktur (105) versehen ist;
der Entriegelungsknopf (2) in Gleitpassung mit der ersten Führungsstruktur (103) ist, das Verriegelungselement (3) in Gleitpassung mit der zweiten Führungsstruktur (104) ist und das Halteelement (5) in Gleitpassung mit der dritten Führungsstruktur (105) ist; und
Bewegungsrichtungen des Entriegelungsknopfs (2), des Verriegelungselements (3) und des Halteelements (5) senkrecht zueinander sind.

13. Verriegelungsvorrichtung (100) nach einem der Ansprüche 8 bis 12, wobei der Entriegelungsknopf (2) einen drückenden Abschnitt (23), einen ersten Arm (21) und einen zweiten Arm (22) umfasst, wobei der erste Arm (21) und der zweite Arm (22) sich von dem drückenden Abschnitt (23) erstrecken und einander gegenüberliegen, und wobei das Verriegelungselement (3) zwischen dem ersten Arm (21) und dem zweiten Arm (22) angeordnet ist und der erste Arm (21) nahe dem Halteelement (5) angeordnet ist und mit dem Schlitz (210) versehen ist.

14. Verriegelungsvorrichtung (100) nach Anspruch 13, wobei:
jeder von dem ersten Arm (21) und dem zweiten Arm (22) mit einer dritten Schräge zum Kontakt mit dem Verriegelungselement (3) versehen ist und/oder das Verriegelungselement (3) mit einer vierten Schräge zum Kontakt mit dem ersten Arm (21) bzw. dem zweiten Arm (22) versehen ist und
das erste elastische Element (4) eine Feder ist und das erste elastische Element (4) an dem Verriegelungselement (3) anliegt und dieses kontaktiert.

15. Verriegelungsvorrichtung (100) nach einem der Ansprüche 1 bis 14, wobei eine Bewegungsrichtung des Entriegelungsknopfes (2), eine Bewegungsrichtung des Verriegelungselements (3) und eine Bewegungsrichtung des Halteelements (5) senkrecht zueinander stehen.

## Revendications

1. Dispositif de verrouillage (100) **caractérisé en ce qu'**il comprend : un boîtier (1) ; et un bouton de déverrouillage (2), un élément de verrouillage (3) et un premier élément élastique (4) qui sont disposés sur le boîtier (1), l'élément de verrouillage (3) étant configuré pour être verrouillé avec et monté sur un trou de verrouillage (70) dans un connecteur (7), le premier élément élastique (4) étant configuré pour maintenir l'élément de verrouillage (3) dans un état verrouillé, le bouton de déverrouillage (2) entraînant l'élément de verrouillage (3) dans un état de déverrouillage lorsqu'il est enfoncé, dans lequel :
le dispositif de verrouillage (100) comprend en outre un élément de retenue (5) et un second élément élastique (6) qui sont disposés sur le boîtier (1),
l'élément de retenue (5) est configuré pour se mettre en prise avec le bouton de déverrouillage (2) pour maintenir le bouton de déverrouillage (2) dans une position de pression dans laquelle l'élément de verrouillage (3) est déverrouillé, et le second élément élastique (6) est configuré pour maintenir l'élément de retenue (5) dans une position de mise en prise où l'élément de retenue (5) se met en prise avec le bouton de déverrouillage (2).

2. Dispositif de verrouillage (100) selon la revendication 1, dans lequel le boîtier (1) est prévu avec un canal de montage (120) monté sur le connecteur (7) et l'élément de retenue (5) a une partie de butée (511) s'étendant dans le canal de montage (120), dans lequel, pendant le montage ou le détachement du dispositif de verrouillage (100) et du connecteur (7), la partie de butée (511) peut être poussée par le connecteur (7) pour amener l'élément de retenue (5) à se dégager du bouton de déverrouillage (2), pour permettre au bouton de déverrouillage (2) de revenir à une position initiale.

3. Dispositif de verrouillage (100) selon la revendication 1 ou 2, dans lequel une direction de déplacement du bouton de déverrouillage (2) est perpendiculaire à une direction de déplacement de l'élément de retenue (5).

4. Dispositif de verrouillage (100) selon la revendication 2, facultativement en combinaison avec la revendication 3, dans lequel :
le canal de montage (120) comprend une première goulotte (11), dans lequel la première goulotte (11) est configurée pour être montée sur un premier rail de coulissement (71) sur le connecteur (7), et la partie de butée (511) s'étend dans la première goulotte (11) et peut être montée sur une partie concave de positionnement (710) du premier rail de coulissement (71), et
pendant le montage ou le détachement du dispositif de verrouillage (100) et du connecteur (7), la partie de butée (511) peut être poussée par le premier rail de coulissement (71) du connecteur (7) pour amener l'élément de retenue (5) à se dégager du bouton de déverrouillage (2).

5. Dispositif de verrouillage (100) selon la revendication 4, dans lequel :
la première goulotte (11) comprend une première extrémité (111) qui est une extrémité ouverte et une seconde extrémité (112) qui est une extrémité fermée ; et
l'élément de verrouillage (3) comprend une partie de languette configurée pour être montée sur le trou de verrouillage (70) du connecteur (7), et la partie de languette coopère avec la seconde extrémité (112) de la première goulotte (11) pour limiter le mouvement du premier rail de coulissement (71) du connecteur (7) par rapport à la première goulotte (11).

6. Dispositif de verrouillage (100) selon la revendication 4 ou 5, dans lequel :
le canal de montage (120) comprend en outre une seconde goulotte (12) parallèle à la première goulotte (11), dans lequel la seconde goulotte (12) est configurée pour être montée sur un second rail de coulissement (72) sur le connecteur (7), et l'élément de verrouillage (3) est situé entre la première goulotte (11) et la seconde goulotte (12) ; dans lequel, facultativement la seconde goulotte (12) a une première extrémité qui est une extrémité ouverte et une seconde extrémité (62) qui est une extrémité fermée ; et l'élément de verrouillage (3) a une partie de languette configurée pour être montée sur le trou de verrouillage (70) du connecteur (7), la partie de languette coopère avec la seconde extrémité de la seconde goulotte (12) pour limiter le mouvement du second rail de coulissement (72) du connecteur (7) par rapport à la seconde goulotte (12).

7. Dispositif de verrouillage (100) selon l'une quelconque des revendications 4 à 6, dans lequel :
la partie de butée (511) comprend un sommet en saillie (5110) s'étendant dans la première goulotte (11), une première inclinaison de poussée (5111) orientée dans une direction d'extraction du premier rail de coulissement (71) et une deuxième inclinaison de poussée (5112) orientée dans une direction d'insertion du premier rail de coulissement (71) ; ou
la partie de butée (511) est en forme d'arc circulaire.

8. Dispositif de verrouillage (100) selon l'une quelconque des revendications 1 à 7, dans lequel :
le boîtier (1) est prévu avec une cavité interne (10) ;
une première extrémité (201) du bouton de déverrouillage (2) est une extrémité de support de force et une seconde extrémité (202) du bouton de déverrouillage (2) est située dans la cavité interne (10) ;
l'élément de retenue (5) est situé dans la cavité interne (10) ; et
l'un parmi le bouton de déverrouillage (2) et l'élément de retenue (5) est prévu avec une fente (210), et l'autre est prévu avec une saillie de mise en prise (521), la fente (210) et la saillie de mise en prise (521) se mettent en prise pour maintenir le bouton de déverrouillage (2) dans la position de pression.

9. Dispositif de verrouillage (100) selon la revendication 8, dans lequel :
pendant la pression du bouton de déverrouillage (2) et avant la mise en prise de la fente (210) avec la saillie de mise en prise (521), le bouton de déverrouillage (2) pousse, par le biais d'une surface de poussée inclinée (5212) agencée sur au moins l'un parmi le bouton de déverrouillage (2) et l'élément de retenue (5), l'élément de retenue (5) pour sortir d'une trajectoire de déplacement du bouton de déverrouillage (2).

10. Dispositif de verrouillage (100) selon la revendication 8 ou 9 en combinaison avec l'une quelconque des revendications 4 à 7, dans lequel :
l'élément de retenue (5) comprend un fond (53), une première partie d'extension (51) et une seconde partie d'extension (52), la première partie d'extension (51) et la seconde partie d'extension (52) s'étendent à partir du fond (53) et sont opposées entre elles et la première goulotte (11) passe entre la première partie d'extension (51) et la seconde partie d'extension (52), et
la partie de butée (511) est située sur la première partie d'extension (51), et la saillie de mise en prise (521) est située sur la seconde partie d'extension (52) et dévie de la partie de butée (511).

11. Dispositif de verrouillage (100) selon la revendication 10, dans lequel le second élément élastique (6) est un ressort, le fond (53) de l'élément de retenue (5) est prévu avec une rainure de montage (530), une première extrémité du second élément élastique (6) est logée dans la rainure de montage (530) et une seconde extrémité du second élément élastique (6) s'étend à l'opposé du bouton de déverrouillage (2).

12. Dispositif de verrouillage (100) selon l'une quelconque des revendications 8 à 11, dans lequel :
une première extrémité (31) de l'élément de verrouillage (3) est raccordée, de manière opérationnelle, au bouton de déverrouillage (2) dans la cavité interne (10) et une seconde extrémité (32) de l'élément de verrouillage (3) est adaptée pour s'étendre à partir de la cavité interne (10) ;
la cavité interne (10) est prévue avec une première structure de guidage (103), une deuxième structure de guidage (104) et une troisième structure de guidage (105) ;
le bouton de déverrouillage (2) est en ajustement coulissant avec la première structure de guidage (103), l'élément de verrouillage (3) est en ajustement coulissant avec la deuxième structure de guidage (104) et l'élément de retenue (5) est en ajustement coulissant avec la troisième structure de guidage (105) ; et
les directions de déplacement du bouton de déverrouillage (2), de l'élément de verrouillage (3) et de l'élément de retenue (5) sont perpendiculaires entre elles.

13. Dispositif de verrouillage (100) selon l'une quelconque des revendications 8 à 12, dans lequel le bouton de déverrouillage (2) comprend une partie de pression (23), un premier bras (21) et un second bras (22), le premier bras (21) et le second bras (22) s'étendent à partir de la partie de pression (23) et sont opposés entre eux, et l'élément de verrouillage (3) est situé entre le premier bras (21) et le second bras (22) et le premier bras (21) est agencé à proximité de l'élément de retenue (5) et est prévu avec la fente (210).

14. Dispositif de verrouillage (100) selon la revendication 13, dans lequel :
chacun parmi le premier bras (21) et le second bras (22) est prévu avec une troisième inclinaison pour être en contact avec l'élément de verrouillage (3) et/ou l'élément de verrouillage (3) est prévu avec une quatrième inclinaison pour le contact avec le premier bras (21) et le second bras (22) respectivement, et
le premier élément élastique (4) est un ressort, et le premier élément élastique (4) vient en butée contre et en contact avec l'élément de verrouillage (3).

15. Dispositif de verrouillage (100) selon l'une quelconque des revendications 1 à 14, dans lequel une direction de déplacement du bouton de déverrouillage (2), une direction de déplacement de l'élément de verrouillage (3) et une direction de déplacement de l'élément de retenue (5) sont perpendiculaires entre elles.
